# EUROPÄISCHE PATENTSCHRIFT

(11) **EP 1 023 212 B1**
(45) Veröffentlichungstag und Bekanntmachung des Hinweises auf die Patenterteilung: **30.03.2005**
(21) Anmeldenummer: 98952709.8
(22) Anmeldetag: 16.10.1998
(51) Int. Cl.: B60T 8/50, B60T 8/48, B60T 8/42

(54) **VERFAHREN ZUM VERBESSERN DES REGELVERHALTENS EINES KFZ.-REGELUNGSSYSTEMS**
METHOD FOR IMPROVING THE CONTROL PERFORMANCE OF A MOTOR VEHICLE CONTROL SYSTEM
PROCEDE PERMETTANT D'AMELIORER LE COMPORTEMENT DE REGULATION D'UN SYSTEME DE REGULATION DE VEHICULE AUTOMOBILE

(30) Priorität: 17.10.1997 DE 19745957; 29.10.1997 DE 19747722; 11.04.1998 DE 19816290
(43) Veröffentlichungstag der Anmeldung: 02.08.2000
(73) Patentinhaber: Continental Teves AG & Co. oHG, 60488 Frankfurt (DE)
(72) Erfinder: BUSCHMANN, Gunther, D-65510 Idstein (DE); WOYWOD, Jürgen, D-64542 Mörfelden (DE); GRONAU, Ralph, D-35083 Wetter (DE)
(86) Internationale Anmeldenummer: PCT/EP1998/006562
(87) Internationale Veröffentlichungsnummer: WO 1999/020509

(56) Entgegenhaltungen:
- EP-A- 0 696 533
- WO-A-96/02409
- WO-A-97/13670
- DE-A- 3 935 395
- DE-A- 19 501 760
- DE-A- 19 525 800
- DE-C- 4 329 140

## Beschreibung

Die Erfindung bezieht sich auf ein verfahren der im Oberbegriff des Anspruchs 1 genannten Art.

Das Verfahren ist insbesondere für eine hydraulische Bremsanlage mit einem geschlossenen Regelungssystem geeignet, bei dem der Bremsdruck in den einzelnen Radbremsen über Einlaß- und Auslaßventile geregelt wird, bei dem ein auf Sperren umschaltbares Trennventil in den einzelnen Bremskreisen zwischen dem Hauptzylinder und den Einlaßventilen eingefügt ist, wobei das Trennventil mit einem Rückschlagventil überbrückt ist, das sich in Richtung des Druckmittelflusses von dem Hauptzylinder zu den Radbremsen hin öffnet. Außerdem wird bei dieser Bremsanlage das über die Auslaßventil abgeleitete Druckmittel mit einer Hydraulikpumpe zur Eingangsseite des oder der Eingangsventile zurückgefördert. Die Saugseite der Hydraulikpumpe ist über ein in der Ruhestellung geschlossenes, auf Durchlaß umschaltbares Sonderventil an den Hauptzylinder angeschlossen.

In der WO-A-97 13670 ist ein Verfahren zum Betrieb einer hydraulischen Bremsanlage beschrieben, bei dem davon ausgegangen wird, daß die Bremsanlage eine Bremsschlupfregelung, eine Antriebsschlupfregelung und eine Giermomentregelung aufweist. Die Bremsanlage soll für eine Aktivbremsung geeignet sein. Unter dem Begriff "Aktivbremsung" wird ausschließlich eine Antriebsschlupfregelung oder eine Giermomentregelung durch Bremseneingriff verstanden, wobei der Bremseneingriff ohne den Willen des Fahrers, d.h. ohne Betätigung des Bremspedals, erfolgt.

Die WO-A-96 02409 offenbart ein Verfahren zum Betreiben einer blockiergeschützten Kraftfahrzeugbremsanlage zur Fahrstabilitäts- und/oder Antriebsschlupfregelung. Mit diesem Verfahren soll ein Vorfüllen der Radbremsen mit Druckmittel sichergestellt werden, damit die Radbremsen nach Maßgabe der Fahrstabilitäts- und/oder Antriebsschlupfregelung mit Bremsdruck beaufschlagt werden können, obwohl der Fahrer selbst das Bremspedal nicht betätigt.

Schließlich ist in der DE 39 35 595 A1 eine Bremsanlage zum Steuern einer Radbremse eines Fahrzeugs beschrieben, bei der ein getrenntes magnetbetätigtes Zweistellungs-Dreiwege-Ventil in jedem Kreis der Bremsanlage dazu verwendet wird, die Druckbeaufschlagung des entsprechenden Bremskreises zu regeln. Ferner ist ein Verfahren offenbart, um den einen drohenden Blockierzustand der Hinterräder zu verhindern.

Bei den bekannten und derzeit verwendeten Kraftfahrzeug-Regelungssystemen zur Blockierschutzregelung (ABS) oder Fahrstabilitätsregelung (ESP, ASMS, FDR) ist zu beobachten, daß bei einem Vordruck (Druck im Hauptzylinder), der nur geringfügig über dem Blockierdruckniveau liegt, eine relativ schlechte, d.h. unter dem theoretisch erzielbaren wert liegende Bremsleistung erzielt wird, weil die Regelalgorithmen und Regelungsvorgänge, die auf eine optimalen Bremswirkung zielen, das Vorhandensein eines optimalen, d.h. hohen Vordrucks voraussetzen bzw. für hohe Vordrücke ausgelegt sind. Zur Berücksichtigung und Erfassung von Situationen mit nied-rigen, nur gering über dem Blockierdruckniveau liegenden Vordrücken ist es bekannt, bestimmte Lernalgorithmen zu implementieren, die bei relativ niedrigen Vordrücken die Druckmodulation entsprechend modifizieren. Bis diese Lernalgorithmen optimal eingeschwungen sind, vergeht jedoch eine gewisse Zeitspanne, wodurch wertvolle Bremsleistung verschenkt und der Bremsweg länger wird als an sich notwendig.

Die Erfahrung zeigt, daß der "Normalfahrer" in vielen Situationen die Bremse zu zaghaft betätigt, so daß ein für einen optimalen geregelten Bremsvorgang ausreichender Vordruck nicht oder zu langsam erreicht wird.

Der Erfindung liegt daher die Aufgabe zugrunde, die insbesondere bei relativ geringen Vordrücken, d.h. nur geringfügig über dem Blockierdruckniveau liegenden Vordrücken, auftretenden Schwierigkeiten zu beseitigen und den Regelungsvorgang in solchen Situationen durch höhere Ausnutzung des vorhandenen Reibwertes oder der Fahrbahnbedingungen zu verbessern und damit die Bremsenwirkung zu steigern.

Es hat sich gezeigt, daß diese Aufgabe durch das im Anspruch 1 beschriebene Verfahren gelöst werden kann, dessen Besonderheit darin besteht, daß bei Regelungseintritt durch Schließen des Druckmittelweges in Richtung von der Radbremse zum Hauptzylinder der Bremsanlage der Zweig des Bremsdruckregelungssystems, an dem das als instabil erkannte Rad angeschlossen ist, zeitweise von dem Hauptzylinderdruck oder Vordruck abgekoppelt wird und daß durch Rückförderung von Druckmittel aus dem Speicher (Niederdruckspeicher) in den Zweig, an dem das instabile Rad angeschlossen ist, ein relativ schneller Anstieg des Bremsdruckes in dem Regelzweig bzw. eine schnelle Annäherung des Radbremsdruckes an das Blockierdruckniveau ("schnell" im Vergleich zu dem Bremsdruckanstieg ohne Abkopplung) herbeigeführt wird.

Es wird bei Regelungseintritt das Trennventil geschlossen und das zum Druckaufbau benötigte Druckmittel zunächst dem Speicher (Niederdruckspeicher) entnommen, wobei dann das Sonderventil erst nach dem zumindest teilweisen Entleeren des Speichers geöffnet, d.h. auf Durchlaß umgeschaltet wird.

Durch das erfindungsgemäße Verfahren wird auch bei relativ niedrigem Vordruck eine im Vergleich zu den herkömmlichen Systemen relativ schnelle Druckerhöhung und Annäherung des Druckes in dem genannten Zweig und damit auch in dem instabil gewordenen Rad an das Blockierdruckniveau erreicht. Der Fahrer wird also durch die genannten Maßnahmen automatisch bei dem Bremsvorgang unterstützt.

Als besonders zweckmäßig hat es sich erwiesen, den Befüllungsgrad des Speichers oder die sich in dem Speicher befindende Druckmittelmenge zu messen oder durch Bildung eines sog. Volumenmodells näherungsweise zu ermitteln und das Öffnen des Sonderventils in Abhängigkeit von dem Befüllungsgrad oder der Druckmittelmenge zu steuern. Wichtig ist, daß das für den Druckaufbau in den Radbremsen benötigte Volumen bei Bedarf an der Saugseite der Hydraulikpumpe zur Verfügung steht. Es wird entweder dem Speicher entnommen oder über das Sonderventil aus dem Hauptzylinder angeliefert. So wird beispielsweise das Sonderventil erst dann geöffnet bzw. auf Durchlaß umgeschaltet, sobald der Befüllungsgrad oder das Volumen im Speicher einen vorgegebenen Mindestwert unterschritten hat.

Ein weiteres Ausführungsbeispiel der Erfindung besteht darin, daß der aktuelle, momentan im Hauptzylinder vorhandene Druck mit der aktuellen Verzögerung des Fahrzeugs bzw. einem der Verzögerung entsprechenden Druckwert verglichen wird. Bekanntlich besteht eine bestimmte Relation zwischen dem Druck und der als Folge dieses Bremsdruckes erreichbaren Fahrzeugverzögerung. Wenn sich nun bei dem Vergleich von Druck und Verzögerung zeigt, daß die Fahrzeugverzögerung über einen dem aktuellen Druck im Hauptzylinder entsprechenden, plausiblen Wert hinausgeht, deutet dies darauf hin, daß das Fahrzeug stärker bremst, als dies von dem Fahrer gewünscht wird. Die erfindungsgemäße Sonderregelung "übersteuert", oder es liegt ein Fehler vor; es wird daher sofort auf eine Standard-Bremsdruckregelung, bei der der Druck vor den Einlaßventilen zu den Radbremsen an den Vordruck gekoppelt ist, zurückgeschaltet.

In den Unteransprüchen sind noch weitere, besonders vorteilhafte Ausführungsarten des erfindungsgemäßen Verfahrens beschrieben.

weitere Einzelheiten der Erfindung gehen aus der folgenden Darstellung von Ausführungsbeispielen der Erfindung anhand der beigefügten Abbildungen hervor.

Es zeigen:
- Fig. 1: die wichtigsten hydraulischen Komponenten einer Bremsanlage, bei der das erfindungsgemäße Verfahren zur Anwendung kommt, und
- Fig. 2: im Diagramm den Verlauf einiger Regelungsgrößen (Raddruck, Vordruck, Fahrzeug-Referenzgeschwindigkeit und Radgeschwindigkeit) während eines Bremsvorganges, bei dem das erfindungsgemäße Verfahren zur Wirkung gelangt.

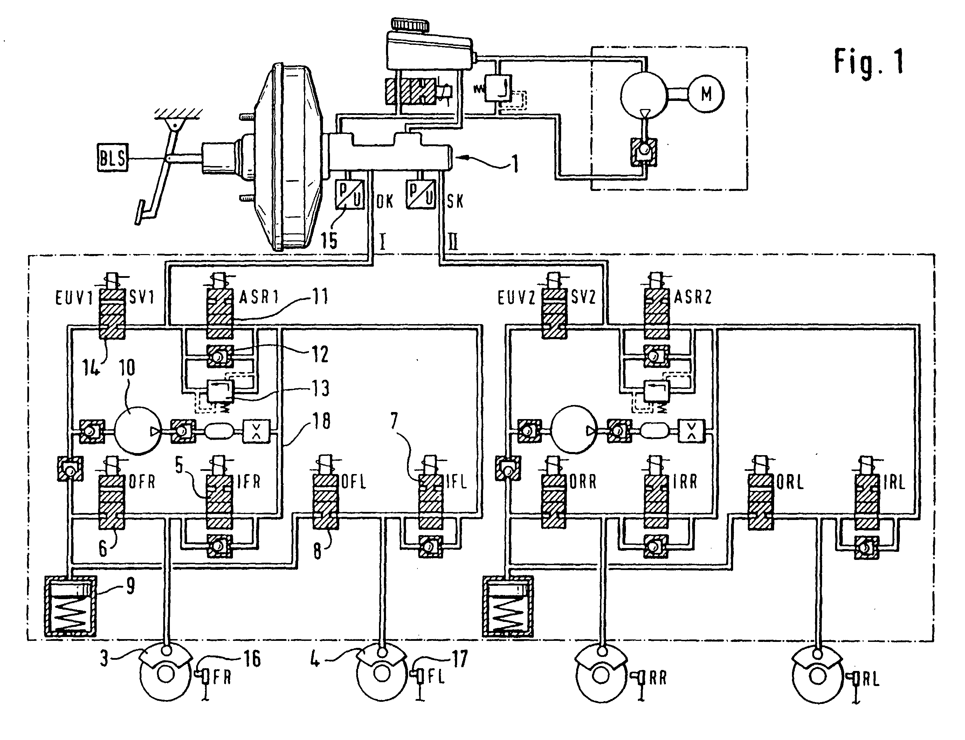

Fig. 1 zeigt eine hydraulische Bremsanlage, die sowohl zur Blockierschutzregelung (ABS) und zur Antriebsschlupfregelung (ASR) als auch zur Fahrstabilitätsregelung (ESP, ASMS, FDR) geeignet ist. Im folgenden wird nur erläutert, was zur Durchführung des erfindungsgemäßen Verfahrens benötigt wird.

Es handelt sich bei der Anlage nach Fig. 1 um eine zweikreisige hydraulische Bremsanlage mit geschlossenem Hydrauliksystem bzw. Bremsdruckregelungssystem. Die Radbremsen sind über zwei identisch aufgebaute Bremskreise I, II an einen Hauptzylinder 1 (Tandem-Hauptzylinder) angeschlossen. Es genügt daher die Beschreibung eines der beiden Bremskreise, im folgenden des Bremskreises I.

Die oberhalb des Hauptzylinders 1 dargestellten Komponenten dienen zur Vorladung; für das erfindungsgemäße Verfahren haben diese Komponenten keine Bedeutung und werden daher nicht näher erläutert.

An den Bremskreis I sind die Radbremsen 3 und 4 der beiden Vorderräder FR, FL über jeweils ein Einlaß-/Auslaßventilpaar 5,6; 7,8 angeschlossen. Es handelt sich um elektromagnetisch steuerbare 2/2-Wegeventile. Die Auslaßventile 6,8 führen zu einem Niederdruckspeicher 9, der über eine Hydraulikpumpe 10, deren elektrischer Antriebsmotor nicht dargestellt ist, entleert wird. In dem Entleerungsweg sind aus bekannten Gründen und in üblicher Weise noch einige Rückschlagventile eingefügt.

Im Druckmittelweg von dem Hauptzylinder 1 zu den Radbremsen ist in jedem Bremskreis I (natürlich auch in II, jedoch nicht beschrieben) ein Trennventil 11 (oder ein sogenanntes ASR-Ventil) eingefügt. Es handelt sich um ein in der Ruhestellung (stromlos) offenes 2/2-Wegeventil, das in Richtung des Druckmittelflusses von dem Hauptzylinder 1 zu den Radbremsen 3,4 bzw. zu den Einlaßventilen 5,7 durch ein Rückschlagventil 12 überbrückt ist. Außerdem ist dem Rückschlagventil 12 ein Druckbegrenzungsventil 13 parallel geschaltet. Das Trennventil 11 wird insbesondere bei einem Antriebsschlupf (ASR)-Regelungsvorgang benötigt, weil in solchen Situationen bei nicht betätigtem Bremsdruckgeber und drucklosem Hauptzylinder 1 Bremsdruck zum Eingriff der Radbremsen benötigt wird.

Außerdem besitzt die Bremsanlage nach Fig. 1 ein Sonderventil 14, nämlich ein in der Ruhestellung geschlossenes 2/2-Wegeventil, das elektrisch auf Durchlaß umgeschaltet werden kann. Über dieses Sonderventil kann bei Bedarf Druckmittel aus dem Hauptzylinder 1 zur Saugseite der Hydraulikpumpe 10 geleitet werden.

Schließlich ist die Bremsanlage nach Fig. 1 noch mit Drucksensoren 15 ausgerüstet, mit denen der tatsächliche Vordruck bzw. der in den beiden Kreisen I, II des Hauptzylinders 1 aufgebaute Hydraulikdruck gemessen werden kann.

Zu einer Bremsanlage der in Fig. 1 gezeigten Art gehören außerdem Radsensoren 16,17, mit denen das Drehverhalten der einzelnen Räder ermittelt und zur Bremsdruckregelung ausgewertet werden kann.

Die Elektronik zur Aufbereitung und Auswertung der Sensorsignale und zur Erzeugung der Pumpen-Ansteuersignale und der Ventilbetätigungssignale ist in Fig. 1 der Einfachheit halber nicht dargestellt. Im allgemeinen werden heutzutage elektronische Regler mit programmgesteuerten Schaltkreisen (Mikrocomputer, Mikrocontroller etc.) verwendet, mit deren Hilfe aus den Radsensorsignalen und eventuell noch aus anderen Eingangsgrößen die Bremsdruckregelsignale auf Basis komplexer Algorithmen errechnet und die benötigten Signale zur Steuerung der Pumpe und zur Betätigung der Ventile gewonnen werden.

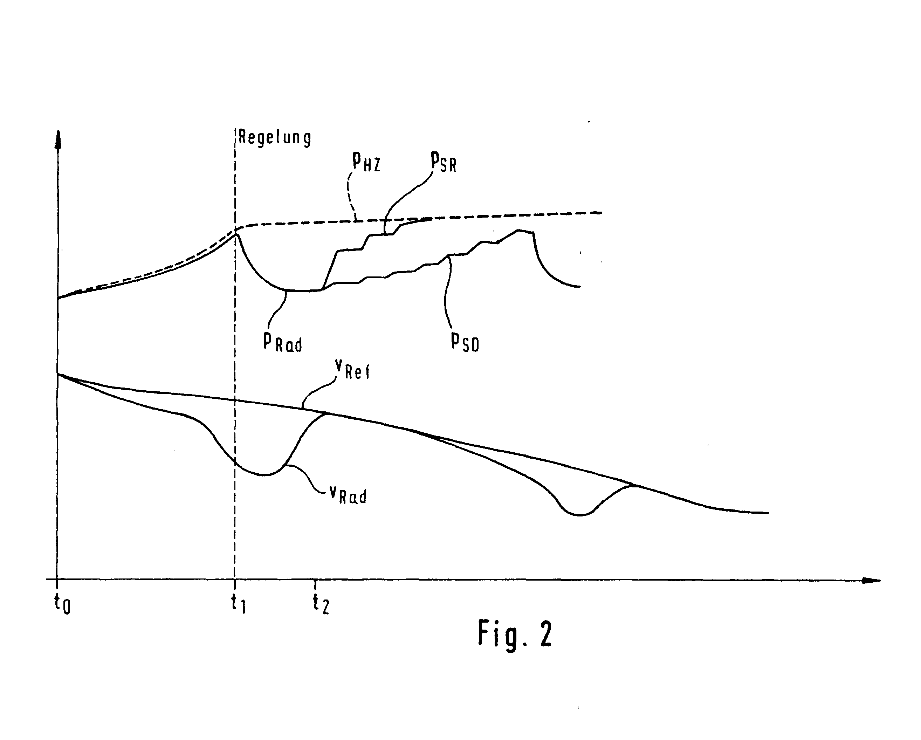

Fig. 2 dient zur Schilderung der Arbeitsweise und Wirkungsweise des erfindungsgemäßen Verfahrens. In Fig. 2 sind, um die Vorgänge bei Ablauf des erfindungsgemäßen Verfahrens zu erläutern, der Druckverlauf im Hauptzylinder p_{HZ} (gestrichelt), der Druckverlauf p_{Rad} in der Radbremse des betrachteten Rades im Normalfall bzw. bei einer Standard-Bremsdruckregelung, der Bremsdruckverlauf p_{SR} in diesem Rad bei Anwendung der erfindungsgemäßen Sonderregelung und außerdem der Geschwindigkeitsverlauf v_{Rad} des zum betrachteten Zeitpunkt instabil gewordenen Rades sowie schließlich der Verlauf der Fahrzeuggeschwindigkeit oder Fahrzeug-Referenzgeschwindigkeit v_{Ref} wiedergegeben. Für alle Kurven bzw. Abläufe gilt derselbe Zeitmaßstab t; der hier betrachtete Bremsvorgang beginnt zum Zeitpunkt t₀ , die Instabilität setzt zum Zeitpunkt t₁ ein.

Eine kritische Bremsensituation, bei der die Erfindung zur Anwendung kommt, liegt vor, wenn bei einem Bremsvorgang mit relativ geringem Vordruck p_{HZ} ein Rad instabil wird und eine Blockierschutzregelung einsetzt. t₁ markiert den Regelungseintritt. Der Bremsdruck p_{Rad} wird abgebaut, so daß sich das Rad erholt, wieder stabil wird (t₂) und der Bremsdruck wieder aufgebaut werden kann. Als Folge des relativ geringen Vordruckes p_{HZ} wird in einem solchen Fall im Anschluß an t₂ der Bremsdruck nur relativ langsam ansteigen und sich relativ langsam dem Blockierdruck oder Vordruck p_{HZ} nähern. Der Druckverlauf bei einer Standardregelung ist in Fig. 1 mit p_{SD} bezeichnet. Infolge dieses langsamen Bremsdruckaufbaus wird natürlich Bremsweg "verschenkt".

Zur vollen Ausnutzung des vorhandenen Reibwertes ist ein im Vergleich zu dem Druckverlauf p_{SD} sehr viel steilerer Druckanstieg und eine sehr viel schnellere Annäherung an das Blockierdruckniveau oder an den Vordruck p_{HZ} erwünscht. Bei Anwendung des erfindungsgemäßen Verfahrens, nämlich der erfindungsgemäßen Sonderregelung wird der mit p_{SR} bezeichnete Bremsdruckverlauf und damit eine erhebliche Steigerung der Bremsenwirkung erzielt. Erreicht wird dies erfindungsgemäß durch ein "Abkoppeln" des Bremsdruckes im Zweig 18 des Bremsdruckregelungssystems, also des Druckes am Eingang der Einlaßventile 5,7, zu Beginn einer Blockierschutzregelung, d.h. bei Regelungseintritt zum Zeitpunkt t, (Fig. 1). Das in der Druckabbauphase im Anschluß an t, über die Auslaßventile 6,8 in den Niederdruckspeicher 9 geleitete Druckmittel wird zum Aufbau eines hohen Systemdrucks im Zweig 18 und damit zur schnellen Erhöhung des Bremsdruckes in den Radbremsen 3,4 aus dem Niederdruckspeicher 9 über die Pumpe 10 in den Zweig 18 gefördert. Diese Abkopplung geschieht durch Umschalten des Trennventiles 11 in den Sperrzustand; bei einer Erhöhung des Vordrucks im Hauptzylinder 1 kann über das Rückschlagventil 12 Druckmittel ungehindert in den Zweig 18 gelangen.

Das Sonderventil 14 ist zu Beginn der Regelung geschlossen, so daß zunächst der Niederdruckspeicher 9 geleert wird. Sobald die Volumenentnahme oder der Befüllungsgrad des Speichers 9 einen Grenzwert unterschreitet, wird das Sonderventil 14 auf Durchlaß umgeschaltet, so daß nunmehr Druckmittel aus dem Hauptzylinder 1 zur Saugseite der Pumpe 10 gelangen kann. Das Umschalten des Sonderventils 14 in den Durchlaßzustand läßt sich in Abhängigkeit von verschiedenen Kriterien steuern, nämlich z.B. von der noch vorhandenen Restmenge im Niederdruckspeicher 9, in Abhängigkeit vom Öffnen des Einlaßventils 5,7 etc..

Zusammenfassend läßt sich die Arbeits- und Wirkungsweise der Schaltung nach Fig. 1, die mit Drucksensoren 15 am Hauptzylinder 1 ausgerüstet ist, wie folgt beschreiben:

Wenn an einem oder mehreren Rädern ABS-Regelungseintritt erkannt wird, werden die Trennventile oder ASR-Ventile 11 geschlossen. Über die parallelgeschalteten Rückschlagventile 12 ist jederzeit eine weitere Druckerhöhung durch den Fahrer möglich. Die Sonderventile 14 bleiben zunächst geschlossen. Das bei dem Druckabbau nach der erkannten Instabilität abgeleitete Druckmittelvolumen wird über die Niederdruckspeicher 9 von der Pumpe 10 angesaugt und dient zur Systemdruckerhöhung vor den Einlaßventilen 5,7. Wenn in dem entsprechenden Bremskreis keine Druckabbauphase vorliegt oder kein Druckabbau mehr zu erwarten ist, wird die Volumenversorgung der Pumpe 10 durch Öffnen der Trennventile 14 sichergestellt, so daß nunmehr die Pumpe 10 direkt aus dem Hauptzylinder 1 gespeist wird und somit ein Systemdruckaufbau (im Zweig 18) ermöglicht wird. Durch Kenntnis des Befüllungsgrades der Niederdruckspeicher 9 kann das Öffnen der Sonderventile 14 bis zur kompletten Entleerung oder kritischen Entleerung der Niederdruckspeicher 9 verzögert werden. Es ist ebenfalls möglich, die Sonderventile 14 synchron zu den Einlaßventilen 5,7 zu öffnen.

Der Befüllungsgrad der Niederdruckspeicher 9 kann durch einen entsprechenden Sensor gemessen werden. Es ist jedoch aus Kostengründen eine Ermittlung des Befüllungsgrades durch ein softwareseitig nachgebildetes Volumenmodell oder Niederdruckspeichermodell, das in an sich bekannter Weise z.B. aus den Ventilbetätigungsvorgänge abgeleitet wird, vorzuziehen.

Der Systemdruck im Bremskreis wird durch ein Überdruckventil 13 begrenzt.

Die Erkennung des Fahrerwunsches erfolgt im vorliegenden Ausführungsbeispiel mit Hilfe des Drucksensors 15. Der im Hauptzylinder 1 gemessene Druck wird einer softwareseitig im (nicht gezeigten) Regler abgelegten Druck/Verzögerungskennlinie des Fahrzeugs zugeordnet. Dieser Wert wird mit den aus den Radsensorsignalen errechneten Verzögerung verglichen. Wenn die tatsächliche Fahrzeugverzögerung wesentlich größer ist als die dem Vordruck, d.h. dem Druck im Hauptzylinder 1 entsprechende Verzögerung, läßt dies darauf schließen, daß der Fahrer eine geringere Verzögerung wünscht. In diesem Fall wird die erfindungsgemäße Sonderregelung beendet und auf eine Standard-Bremsdruckregelung übergegangen, um eine zu starke, über den durch die Pedalbetätigung geäußerten Bremsbefehl hinausgehende Abbremsung zu verhindern.

Grundsätzlich ist es auch möglich, das erfindungsgemäße Verfahren bei einer Bremsanlage einzusetzen, die mit einer sog. Bremsassistenten-Funktion ausgerüstet ist.

Eine Zwangsbremsung auf µ-Sprung-Fahrbahn wird zweckmäßigerweise durch eine Langzeitüberwachung des Raddrehverhaltens (alle Räder stabil) verhindert.

Das erfindungsgemäße Verfahren erweist sich als außerordentlich vorteilhaft. Da dem System immer ein "optimaler Vordruck" zur Verfügung steht, werden lange Druckaufbaureihen vermieden, welche eine inhomogene Verzögerung und Bremsleistungsverluste erzeugen würden.

Mit dem erfindungsgemäßen Verfahren wird dem "Normalfahrer" eine optimale Reibwertausnutzung ermöglicht, auch wenn gewisse Bedienungsfehler, insbesondere eine zu zaghafte Bremsenbetätigung, vorliegen.

Regelbremsungen mit geringem Vordruck erzeugen bei Bremsvorgängen in der Kurve häufig Stabilitätsprobleme, wenn die Standard-Regelungsalgorithmen zur Anwendung kommen. Mit dem erfindungsgemäßen Verfahren werden auch diese Schwierigkeiten verringert oder gar beseitigt.

Der Fahrer hat in jeder Situation die Möglichkeit, den Bremsdruck durch Erhöhung des Vordrucks zu steigern, was ein hohes Maß an Sicherheit darstellt und Unterbremsungen verhindert.

## Patentansprüche

1. Verfahren zum Verbessern des Regelverhaltens einer ABS-Regelung eines Kraftfahrzeug-Regelungsystems, wie eines ABS, ASR oder ESP, das eine Bremsanlage mit einem Hauptzylinder (1) und mit einer Pumpe enthält, bei dem der Bremsdruck in den einzelnen Radbremsen über Einlaß- und Auslaßventile geregelt wird und bei dem zumindest in bestimmten Situationen oder unter vorgegebenen Bedingungen beim Instabilwerden eines Rades und Regelungseintritt des ABS der Druckmittelzufluß zu der Radbremse des instabilen Rades gesperrt und Druckmittel aus der Radbremse in einen Speicher abgeleitet wird, aus dem das Druckmittel in das Bremsdruckregelungssystem zurückgefördert wird, wobei bei Regelungseintritt des ABS (t₁) durch Schließen des Druckmittelweges in Richtung von der Radbremse (3,4) zum Hauptzylinder (1) der Bremsanlage der Zweig (18) des Regelungssystems, an dem das als instabil erkannte Rad angeschlossen ist, zeitweise von dem Hauptzylinderdruck oder Vordruck abgekoppelt wird und wobei durch Rückförderung von Druckmittel aus einem Niederdruckspeicher (9) in den Zweig (18) des Regelungssystems, an dem das instabile Rad angeschlossen ist, der Systemdruck vor den Einlaßventilen (5,7) erhöht wird, und wobei nach dem Abbau des Bremsdrucks an der Radbremse, so daß sich das Rad erholt und wieder stabil ist, bei einem Zeitpunkt (t₂) ein relativ schneller Anstieg des Bremsdruckes oder eine relativ schnelle Annäherung des Bremsdruckes an das Blockierdruckniveau herbeigeführt wird, bei welchem das Bremsdruckregelungssystem ein auf Sperren umschaltbares Trennventil (11) zwischen dem Hauptzylinder (1) und den Einlaßventilen (5,6;7,8) eingefügt ist, wobei das Trennventil (11) durch ein Rückschlagventil (12), das sich in Richtung des Druckmittelflusses von dem Hauptzylinder (1) zu der Radbremse öffnet, überbrückt ist, und bei welchem Bremsdruckregelungssystem das über das Auslaßventil (6,8) abgeleitete Druckmittel mit einer Hydraulikpumpe (10) zur Eingangsseite des Einlaßventils (5,7) zurückgefördert wird und bei welchem Bremsdruckregelungssystem die Saugseite der Hydraulikpumpe (10) über ein in der Ruhestellung geschlossenes, auf Durchlaß umschaltbares Sonderventil (14) an den Hauptzylinder (1) angeschlossen ist, wobei bei Regelungseintritt das Trennventil (11) geschlossen und Druckmittel mit Hilfe der Hydraulikpumpe (10) aus dem Speicher (9) heraus in den geregelten Zweig (18) gefördert wird, wobei das Sonderventil (14) nach dem zumindest teilweisen Entleeren des Speichers (9) auf Durchlaß umgeschaltet wird und wobei die kritische Bremsensituation, bei der das Verfahren zur Anwendung kommt, genau dann und nur dann vorliegt, wenn bei einem Bremsvorgang mit relativ geringem Vordruck pHZ ein Rad instabil wird und eine Blockierschutzregelung einsetzt.

2. Verfahren nach Anspruch 1,
**dadurch gekennzeichnet, daß** der Befüllungsgrad des Speichers (9) oder die sich in dem Speicher (9) befindende Druckmittelmenge gemessen oder durch Bildung eines Volumenmodells in an sich bekannter Weise näherungsweise ermittelt werden und daß das Öffnen des Sonderventils (14) bzw. das Umschalten auf Durchlaß in Abhängigkeit von dem Befüllungsgrad oder der Druckmittelmenge im Speicher (9) gesteuert wird.

3. Verfahren nach Anspruch 1 oder 2,
**dadurch gekennzeichnet, daß** das Sonderventil (14) geöffnet (auf Durchlaß umgeschaltet) wird, sobald der Befüllungsgrad oder die Druckmittelmenge im Speicher (9) einen vorgegebenen Mindestwert unterschreitet.

4. Verfahren nach einem oder mehreren der Ansprüche 1 bis 3,
**dadurch gekennzeichnet, daß** das Sonderventil (14) in Abhängigkeit von der Ansteuerung des Einlassventils (5,7) und/oder gleichzeitig mit dem Öffnen des Einlaßventils (5,7) auf Durchlaß geschaltet wird.

5. Verfahren nach einem oder mehreren der Ansprüche 1 bis 4,
**dadurch gekennzeichnet, daß** der aktuelle Druck im Hauptzylinder (1) einer in einem Regler abgelegten Druck/Verzögerungskennlinie zugeordnet wird und dieser Verzögerungswert mit der aktuellen Verzögerung des Fahrzeugs verglichen wird und auf eine Standard-Bremsdruckregelung ohne Abkoppelung des Zweiges (18) zurückgeschaltet wird, wenn die Fahrzeugverzögerung einen dem aktuellen Druck im Hauptzylinder entsprechenden, plausiblen Wert überschreitet.

## Claims

1. Method of improving the control behaviour of an ABS-control of an automotive vehicle control system, such as an ABS, TCS, or ESP system, which comprises a brake system with a master cylinder (1) and a pump, wherein the braking pressure in the individual wheel brakes is controlled by means of inlet and outlet valves, and wherein at least in certain situations or under predetermined conditions when a wheel becomes unstable and upon control commencement of the ABS, the pressure fluid flow to the wheel brake of the unstable wheel is closed and pressure fluid is discharged from the wheel brake into an accumulator, out of which the pressure fluid is returned into the braking pressure control system, wherein, upon commencement of the ABS control (t₁), that branch (18) of the control system to which the wheel detected as unstable is connected is temporarily uncoupled from the master cylinder pressure or initial pressure by closing the pressure fluid conduit in the direction from the wheel brake (3, 4) to the master cylinder (1) of the brake system, and wherein by returning pressure fluid out of a low-pressure accumulator (9) into the branch (18) of the control system to which the unstable wheel is connected, the system pressure upstream of the inlet valves (5, 7) is increased, and wherein after the reduction of the braking pressure on the wheel brake, with the aim that the wheel recovers and is stable again, a relatively quick rise of the braking pressure or a relatively quick approach of the braking pressure to the wheel lock pressure level is caused at time (t₂), wherein in the braking pressure control system a separating valve (11) which is commutable to close is interposed between the master cylinder (1) and the inlet valves (5, 6; 7, 8), wherein the separating valve (11) is bypassed by a non-return valve (12) that opens in the direction of the pressure fluid flow from the master cylinder (1) to the wheel brake, and in which braking pressure control system the pressure fluid discharged by way of the outlet valve (6, 8) is returned by a hydraulic pump (10) to the inlet side of the inlet valve (5, 7), and in which braking pressure control system the suction side of the hydraulic pump (10) is connected to the master cylinder (1) by way of a special valve (14) which is closed in its inactive position and is commutable to open, wherein upon commencement of the control, the separating valve (11) is closed and pressure fluid is delivered by means of the hydraulic pump (10) from the accumulator (9) into the controlled branch (18), wherein the special valve (14) is switched to open passage after the accumulator (9) has been emptied at least in part, and wherein the critical braking situation in which the method is implemented prevails precisely in that moment and only in that moment when a wheel becomes unstable and anti-lock control commences during a braking operation with a relatively low initial pressure p_{HZ}.

2. Method as claimed in claim 1,
**characterized in that** the degree of filling of the accumulator (9) or the pressure fluid quantity contained in the accumulator (9) is measured or determined in approximation in a per se known manner by producing a volume model, and **in that** the opening of the special valve (14) or the switch-over to open passage is controlled in dependence on the degree of filling or the pressure fluid quantity in the accumulator (9).

3. Method as claimed in claim 1 or 2,
**characterized in that** the special valve (14) is opened (switched over to open passage) as soon as the degree of filling or the pressure fluid quantity in the accumulator (9) has fallen below a predetermined minimum value.

4. Method as claimed in any one or more of claims 1 to 3,
**characterized in that** the special valve (14) is switched to open passage in dependence on the actuation of the inlet valve (5, 7) and/or simultaneously with the opening of inlet valve (5, 7).

5. Method as claimed in any one or more of claims 1 to 4,
**characterized in that** the current pressure in the master cylinder (1) is associated with a pressure/deceleration characteristic curve stored in a controller and this deceleration value is compared with the current deceleration of the vehicle, and switch-back to a standard braking pressure control without uncoupling of branch (18) is effected when the vehicle deceleration exceeds a plausible value which corresponds to the current pressure in the master cylinder.

## Revendications

1. Procédé pour améliorer le comportement en régulation d'une régulation ABS d'un système de régulation de véhicule automobile, tel qu'un système ABS, ASR ou ESP, qui contient un système de freinage avec un cylindre principal (1) et une pompe, dans lequel la pression de freinage dans les différents freins des roues est régulée par des soupapes d'admission et des soupapes d'échappement, et dans lequel, au moins dans des situations déterminées ou des conditions prédéfinies, lorsqu'une roue devient instable et à l'intervention de la régulation ABS, l'arrivée du fluide sous pression au frein de la roue instable est bloquée et le fluide sous pression est évacué du frein de la roue dans un accumulateur, à partir duquel le fluide sous pression est recyclé dans le système de régulation de la pression de freinage, à l'intervention de la régulation ABS (t₁), par fermeture de la voie du fluide sous pression, dans la direction depuis le frein de la roue (3, 4) vers le cylindre principal (1) du système de freinage, la branche (18) du système de régulation, auquel est raccordée la roue reconnue instable, est désaccouplée temporairement de la pression du cylindre principal ou pression d'entrée, et par reflux du fluide sous pression depuis un accumulateur basse pression (9) dans la branche (18) du système de régulation, auquel est raccordée la roue instable, la pression du système étant augmentée en amont des soupapes d'admission (5, 7), et après réduction de la pression de freinage sur le frein de la roue, de manière que la roue se rétablisse et redevienne stable, à un instant (t₂) une augmentation relativement rapide de la pression de freinage ou une approche relativement rapide de la pression de freinage au niveau de la pression de blocage étant provoquée, pour lequel le système de régulation de la pression de freinage insère une soupape de séparation (11), commutable sur la fermeture, entre le cylindre principal (1) et les soupapes d'admission (5, 6 ; 7, 8), la soupape de séparation (11) étant pontée par un clapet de non-retour (12) qui s'ouvre dans le sens de l'écoulement du fluide sous pression, du cylindre principal (1) vers le frein de la roue, et dans lequel système de régulation de la pression de freinage le fluide sous pression, évacué par la soupape d'échappement (6, 8), est renvoyé, au moyen d'une pompe hydraulique (10), au côté entrée de la soupape d'admission (5, 7), et dans lequel système de régulation de la pression de freinage le côté aspiration de la pompe hydraulique (10) est raccordé au cylindre principal (1), par une soupape spéciale (14) fermée en position de repos et pouvant commuter en position de passage, à l'intervention de la régulation la soupape de séparation (11) étant fermée et le fluide sous pression étant transporté, à l'aide de la pompe hydraulique (10), depuis l'accumulateur (9) dans la branche (18) régulée, la soupape spéciale (14) étant commutée sur la position de passage après la vidange au moins partielle de l'accumulateur (9), et la situation de freinage critique, pour laquelle le procédé est appliqué, ne se produisant alors exactement et seulement que lorsque au cours d'un freinage avec une pression d'entrée (p_{HZ}) relativement basse, une roue devient instable et une régulation de la protection anti-blocage s'instaure.

2. Procédé selon la revendication 1, **caractérisé en ce que** le degré de remplissage de l'accumulateur (9) ou de la quantité du fluide sous pression se trouvant dans l'accumulateur (9) est mesuré, ou est déterminé approximativement, de manière connue, par formation d'un modèle de volume, et **en ce que** l'ouverture de la soupape spéciale (14) ou la commutation sur la position de passage est commandée en fonction du degré de remplissage ou de la quantité de fluide sous pression dans l'accumulateur (9).

3. Procédé selon la revendication 1 ou 2, **caractérisé en ce que** la soupape spéciale (14) est ouverte (commutée sur la position de passage), dès que le degré de remplissage ou la quantité de fluide sous pression dans l'accumulateur (9) passe au-dessous d'une valeur minimale prédéfinie.

4. Procédé selon une ou plusieurs des revendications 1 à 3, **caractérisé en ce que** la soupape spéciale (14) est commutée sur la position de passage en fonction de la commande de la soupape d'admission (5, 7) et/ou simultanément avec l'ouverture de la soupape d'admission (5, 7).

5. Procédé selon une ou plusieurs des revendications 1 à 4, **caractérisé en ce que** la pression actuelle dans le cylindre principal (1) est affectée à une courbe caractéristique pression/ralentissement enregistrée dans un régulateur, et cette valeur de ralentissement est comparée au ralentissement actuel du véhicule, et on repasse à une régulation standard de la pression de freinage sans découplage de la branche (18), lorsque le ralentissement du véhicule dépasse une valeur plausible correspondant à la pression actuelle dans le cylindre principal.
